# EUROPÄISCHE PATENTSCHRIFT

(11) **EP 2 190 796 B1**
(45) Veröffentlichungstag und Bekanntmachung des Hinweises auf die Patenterteilung: **01.06.2016**
(21) Anmeldenummer: 08801276.0
(22) Anmeldetag: 03.09.2008
(51) Int. Cl.: C03B 35/16, C03B 33/023, B65G 49/06, C03B 33/033

(54) **VORRICHTUNG UND VERFAHREN ZUM TRENNEN EINES KONTINUIERLICHEN GLASBANDES**
DEVICE AND METHOD FOR SEVERING A CONTINUOUS GLASS STRIP
DISPOSITIF ET PROCÉDÉ DE SÉPARATION D'UNE BANDE DE VERRE CONTINUE

(30) Priorität: 13.09.2007 DE 102007043567
(43) Veröffentlichungstag der Anmeldung: 02.06.2010
(73) Patentinhaber: Grenzebach Maschinenbau GmbH, 86663 Asbach-Bäumenheim (DE)
(72) Erfinder: LANG, Edwin, 86641 Rain (DE)
(74) Vertreter: Kindermann, Peter
(86) Internationale Anmeldenummer: PCT/DE2008/001469
(87) Internationale Veröffentlichungsnummer: WO 2009/033455

(56) Entgegenhaltungen:
- BE-A- 392 056
- DE-A1-102004 025 329
- DE-B- 1 226 754
- DE-B1- 1 496 431
- FR-A- 2 530 612
- US-A- 1 861 665
- US-A- 5 104 523
- US-A1- 2004 000 045

## Beschreibung

Die vorliegende Erfindung betrifft Vorrichtungen und Verfahren zum Abtrennen eines gekennzeichneten Bereichs eines auf einem Laufband fortlaufend produzierten Glasbandes.

Die Herstellung von Floatglas erfolgt durch das fortlaufende Ausgießen der Glasschmelze auf einem in einer länglichen Wanne erhitzten Zinnbad und das sich hieraus ergebende Glasband.

Das anschließende Konfektionieren von Floatglas geschieht durch Längsschneiden und Querschneiden des aus der Floatglasfertigung mit einer bestimmten Vorschubgeschwindigkeit laufenden Glasbandes. Das Längsschneiden bewirken hierbei in entsprechender Position über dem Glasband stationär installierte Längsschneidräder und das Querschneiden erfolgt mit Hilfe von Schneidbrücken und daran quer über das Glasband bewegten Querschneidrädern.

Bei der Herstellung von Glasscheiben im Floatglas-Verfahren ist eine vollständige Vermeidung von Partikeleinschlüssen bzw. Verunreinigungen im Glas zwar technisch denkbar, aber mit wirtschaftlich annehmbaren Maßnahmen kaum möglich. Es ist deswegen nicht verwunderlich, dass zum Beispiel in Flachgläsern Verunreinigungen als Begleiter des Glases anzutreffen sind und in der Glasmatrix Einschlüsse vorliegen. Unter diesen Einschlüssen sind insbesondere Nickelsulfideinschlüsse und Einschlüsse aus feuerfesten Materialien hervorzuheben, die zumeist den größten Anteil dieser Verunreinigungen ausmachen und die oftmals mit einer Größe bis zu etwa 600 Mikrometer vorliegen können.

Einschlüsse bzw. Partikel aus Nickelsulfiden oder feuerfesten Materialien im Sub -Millimeter-Bereich werden vom menschlichen Auge nicht wahrgenommen und beeinflussen ein ästhetisches Erscheinungsbild von Glasscheiben oder dergleichen Produkten daher nicht. Allerdings stellen solche Einschlüsse Fremdkörper dar, die im Vergleich mit Glas unterschiedliche Materialeigenschaften aufweisen und deshalb unter Umständen, zum Beispiel nach einem Härtevorgang, zu einem spontanen Bruch des Glases führen können. Solche Spontanbrüche, wie sie unter anderem bei Fassadenverkleidungen beobachtet werden, können erheblichen Personenschaden und Sachschaden nach sich ziehen. Man ist daher bemüht, mit geeigneten Verfahren bereits vor einer weiteren Verwendung Informationen über mögliche Einschlüsse zu erhalten, um entsprechende Glasanteile rechtzeitig ausscheiden zu können.

Zum Nachweis von Einschlüssen in Flachglas wurden schon optische Untersuchungsmethoden vorgeschlagen, die im Wesentlichen auf der Streuung von Laserlicht im amorphen Glas und der Analyse des gestreuten Lichts beruhen.

Hierdurch können Einschlüsse im Allgemeinen recht zuverlässig nachgewiesen werden, jedoch ist es nachteilig, dass diese Methode stets Laserlicht und damit einen relativ großen apparativen Aufwand verursacht. Zudem ist der nutzbare Querschnitt eines Laserstrahls begrenzt und erfordert deshalb in Anbetracht der zu untersuchenden großen Glasflächen entweder den Einsatz mehrerer Laser oder einen erhöhten Zeitaufwand durch das selektive Untersuchen kleinerer Flächen.

Deshalb setzt sich das aus der WO 2007/051582 A1 bekannte Verfahren das Ziel in einfacher Weise und ohne eine externe Lichtquelle Partikel in einem Gegenstand aus Glas nachzuweisen.
Das dort beschriebene Verfahren beruht im Wesentlichen darauf, dass während der Erstarrung des flüssigen Glases auf Umgebungstemperatur vom Gegenstand aus Glas emittierte elektromagnetische Strahlung ortsauflösend aufgenommen wird und die so ermittelte ortsabhängige Detektion der Strahlung zur Ermittlung von Einschlüssen ausgewertet wird. Hierzu wird der Gegenstand aus Glas gleichförmig bewegt und die Aufnahme e-mittierter Strahlung mit einem oder mehreren Liniendetektoren oder Flächendetektoren, wie einer CCD - Kamera oder einer CMOS - Kamera, durchgeführt. Die Belichtungszeit eines Flächendetektors wird hierbei an die Bewegungsgeschwindigkeit des Gegenstandes angepasst.

Die entdeckten Einschlüsse müssen im Folgenden gekennzeichnet und ausgeschnitten werden. Dieser Prozess sollte aus ersichtlichen Gründen möglichst wenig Verschnitt ergeben und schnell, ohne eine Störung des laufenden Produktionsprozesses erfolgen.

Für die aus der DE 10 2004 025 329 A1 zum Beispiel bekannte Herstellung von Autoscheiben fällt eine beträchtliche Menge Verschnitt an, wenn aus den konfektionierten rechteckigen Rohlingen die trapezähnlichen Autoglasscheiben ausgeschnitten werden. Zur Reduzierung des Verschnitts soll zu diesem Zweck im Wesentlichen das Schnittmuster so gewählt werden, dass jeweils zwei um 180° relativ zueinander gedreht orientierte Glasplatten mit einer entsprechenden Schrägkante direkt aneinander stoßend und mit ihren parallelen Trapezkanten miteinander fluchtend in Gestalt eines Streifens quer über dem Floatglasband angeordnet sind und in Richtung des Floatglasbandes aufeinander folgende Glasplattenpaarstreifen unmittelbar aneinander grenzen. Hierbei sollen die schräg verlaufenden Trapezkanten mittels Längsschneideorganen und die parallelen Trapezkanten mittels Querschneideorganen geschnitten werden.

Auf welche Weise die von den Schneideorganen abgeschnittenen Glasanteile die einen Verschnitt darstellen von den Nutzflächen getrennt werden, ist aus der DE 10 2004 025 329 A1 nicht bekannt.

Aus der EP 1 475 356 B1 ist ein Verfahren zum Teilen von Glastafeln in Glas-Zuschnitte nach einem vorgegebenen Aufteilungsmuster bekannt, bei dem Glastafeln in wenigstens einem ersten Teilungsschritt nach einer Richtung (X-Schnitte) in Glastafel-Zuschnitte und diese dann in wenigstens einem zweiten Teilungsschritt nach einer zum ersten Teilungsschritt senkrecht stehenden Richtung (Y-Schnitte) in Glas-Zuschnitte geteilt werden. Hierbei werden die nach dem Teilen in X-Richtung erhaltenen Glastafel-Zuschnitte auf dem nach der ersten Trennstelle vorgesehenen Tisch gemeinsam einer zweiten Trennstelle, an der die Glastafel-Zuschnitte längs der Y-Schnitte geteilt werden, zugeführt.
Zu dem eigentlichen Vorgang des Zuschnitts und des Abtrennens findet sich in dieser Schrift kein Hinweis.

Aus der DE 1496431 ist eine Maschine zum Schneiden von Flachglas bekannt, mit der Ausnahmslos glatte Bruchkanten erzielt werden können.

In der DE 1226754 ist eine Vorrichtung zum Abbrechen von Streifen von einer laufenden Glasscheibe beschrieben.

Die US 7080766 B2 betrifft eine Vorrichtung und ein Verfahren um Bänder von Material in Streifen zu schneiden.

In der US 5104523 ist ein System zum Sortieren von Glasplatte einer Vielzahl von Qualitätsstufen beschrieben.

Es sind weiter Vorrichtungen zum Abtrennen eines Glasbandes vorgesehen, welche jeweils aus ihrer Position im Rollengang veränderbare Rollen aufweisen, wie aus der US 1 861 665 A, aus der BE 392 056 A, sowie aus der FR 2 530 612 A1 bekannt.

Es ist daher die Aufgabe der vorliegenden Erfindung Vorrichtungen und Verfahren zum schnellen und zuverlässigen Trennen und Ausleiten von gekennzeichneten Glasplatten, zu ermöglichen, die in einem fortlaufenden Produktionsprozess eingesetzt werden können wobei der Verschnitt minimal ist.

Diese Aufgabe wird hinsichtlich einer ersten, zweiten und dritten Vorrichtung gelöst durch die Merkmale der Ansprüche 1, 2 bzw. 3, und bezüglich eines ersten, zweiten und dritten Verfahrens durch die Maßnahmen der Ansprüche 11, 12 bzw. 13.

In den Unteransprüchen sind weiter vorteilhafte Ausführungsbeispiele der Erfindung gekennzeichnet.

Die erfindungsgemäße Trennvorrichtung wird im Folgenden näher beschrieben.

Es zeigen im Einzelnen:
- Fig. 1:: eine Darstellung im Querschnitt
- Fig. 2:: eine 1. Variante des Trennvorgangs
- Fig.3:: eine 2.Variante des Trennvorgangs
- Fig.4:: eine 3. Variante des Trennvorgangs
- Fig.5: eine 4. Variante des Trennvorgangs

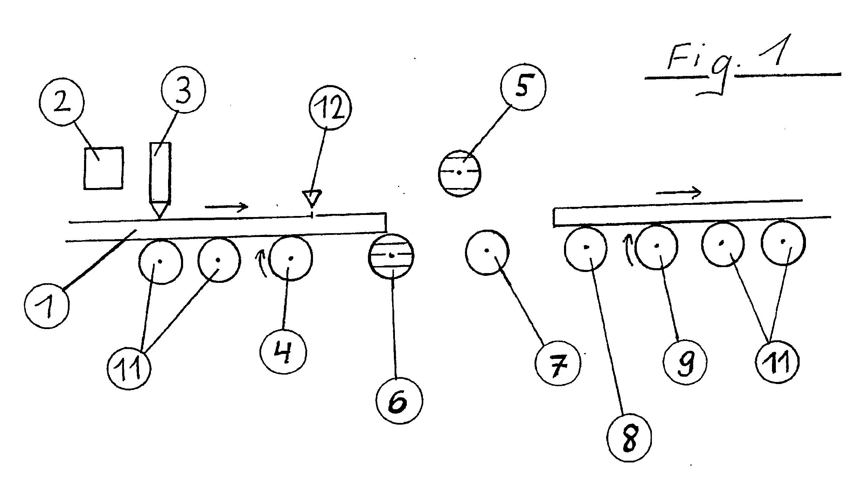

In der Fig.1 sind die wesentlichen Anlagenteile im Querschnitt dargestellt.

Mit (1) ist hier das abgekühlte Glasband bezeichnet, das von der linken Seite her über Laufwalzen herangeführt wird. Die Laufwalze (4) steht in dieser Figur für eine Reihe von Laufwalzen die in regelmäßigen Abständen das Glasband über das Laufband (11) weiter transportieren.

Der Fehlerdetektor (2) steht in dieser Darstellung für eine Vielzahl von Detektoren und Möglichkeiten der Erkennung solcher störender, bzw. nicht mehr tolerierbarer Einschlüsse. Hierbei wird, jeweils entsprechend der Qualität oder den speziellen Anforderungen an das betreffende Glas, nach Fehlerklassen unterschieden welche und wie viele Einschlüsse noch tolerierbar sind. Ergibt die Prüfung, dass bestimmte Bereiche des Glasbandes (1) den gestellten Anforderungen nicht entsprechen, werden diese Bereiche durch die Markierungseinrichtung (3) markiert. Eine solche Markierung besteht zum Beispiel darin, dass die Begrenzungslinie des betreffenden Glasabschnitts angeritzt wird und nach dem weiteren Transport des Glasbandes (1) an dieser Begrenzungslinie durch Mittel zum Abdrücken (5) dieser Teil des Glasbandes (1) abgebrochen wird. In der Fig. 1 ist eine solche Markierung (12) durch ein, auf einer Spitze stehendes, Dreieck hinter der Laufwalze (4) gezeichnet.

Als Mittel zum Abdrücken eines unerwünschten Bereichs in dem sich bewegenden Glasband kann eine Rolle (5), wie in der Fig.1 dargestellt, verwendet werden. Zu diesem Zweck kann jedoch auch jede andere druckfeste Vorrichtung von ausreichender Länge verwendet werden.
Die Abdrückwalze (5) kann frühestens dann in Aktion treten, wenn die entsprechende geritzte Begrenzungslinie des Glasbands (1) im Bereich des höchsten Punkts der Brecherwalze (6) liegt, da nur dann von der Abdrückwalze (5) durch das Aufsetzen auf das Glasband (1) auf dieses ein Biegemoment aufgebracht werden kann, das zum Abbrechen des unerwünschten Glasstreifens (10) als Ausschuss führt.

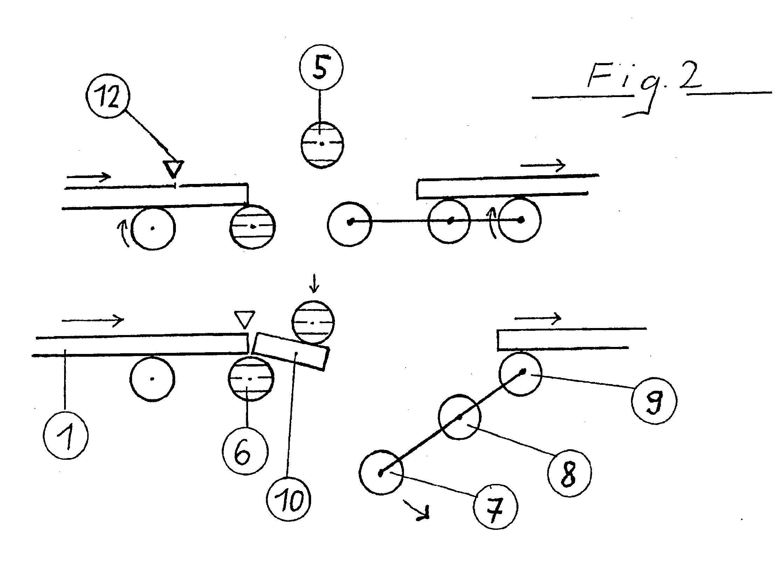

In der Fig. 2 ist eine 1. Variante der weiteren Behandlung, bzw. der schnellen Ausleitung, des abgebrochenen Glasstücks (10) gezeigt.
Die weiteren Walzen des, das gesamte Glasband befördernden, Laufbands (11) im Bereich der Ausleitung eines abzubrechenden Glasstücks (10) sind mit vorderer Schleusenwalze (7) und hinterer Schleusenwalze (8) bezeichnet. Die folgende Laufwalze (9) ist wieder ein normales Teilstück des Laufbands (11).
Durch die in der Fig.2 gezeichnete Linie, die die Drehachsen der vorderen Schleusenwalze (7) und der hintern Schleusenwalze (8) mit der Drehachse der Laufwalze (9) verbindet, ist skizzenhaft gezeigt, dass die Drehachsen der beiden Schleusenwalzen (7,8) mechanisch miteinander verbunden sind und um die Drehachse der Laufwalze (9) drehbar gelagert sein können.
Wie aus dem unteren Teil der Fig.2 zu ersehen ist, werden in dieser Variante die Schleusenwalzen (7,8) nach unten weggeklappt um dem Glasstück (10), der Schwerkraft folgend, den Weg frei zu machen. In diesen Vorgang kann auch die Laufwalze (9) einbezogen sein.
Nach dem Entfernen des Glasstücks (10) werden die weggeklappten Schleusenwalzen (7,8, oder 9) hochgeklappt und bilden wieder einen integrierten Teil des Laufbands (11).

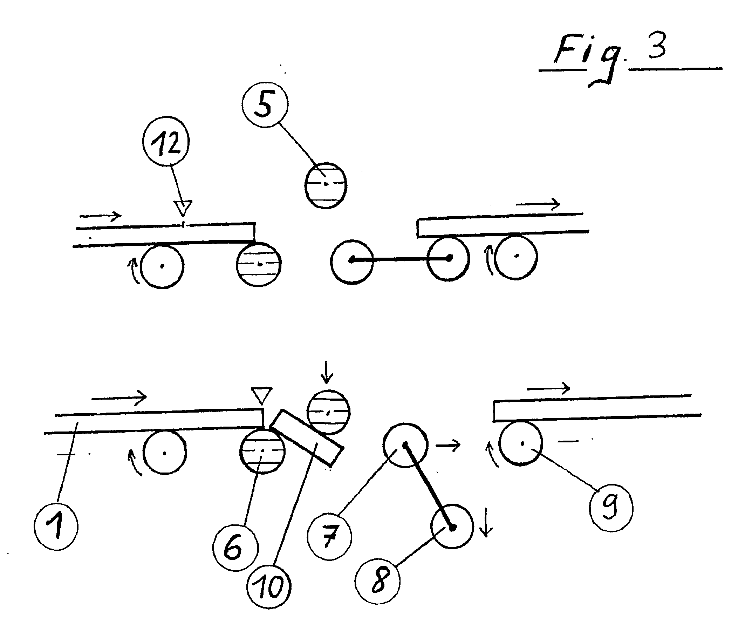

Die in der Fig.3 dargestellte 2.Variante unterscheidet sich im Wesentlichen von der 1. Variante dadurch, dass die Schleusenwalzen (7,8) zwar aneinander gekoppelt bleiben, jedoch eine wesentlich andere Ausweichbewegung vollführen als in der 1. Variante.

Im oberen Teil der Fig.3 ist dies schon dadurch zu ersehen, dass zwar die Drehachsen der Schleusenwalzen (7,8) noch weiterhin verbunden sind, jedoch keine mechanische Verbindung mit der Laufwalze (9) aufweisen.
Aus dem unteren Teil der Fig.3 ist zu ersehen, dass für den Vorgang des Ausschleusens des Glasstücks (10) sich die vordere Schleusenwalze (7) nach rechts bewegt und sich gleichzeitig die hintere Schleusenwalze (8) nach unten bewegt. Da die Schleusenwalzen miteinander verbunden sind, bewirkt dieser Vorgang der gekoppelten Ausweichbewegung der Schleusenwalzen (7,8), dass sich insgesamt der Freiraum für das Herabfallen des Glasstücks (10) schneller und weiter öffnen kann.

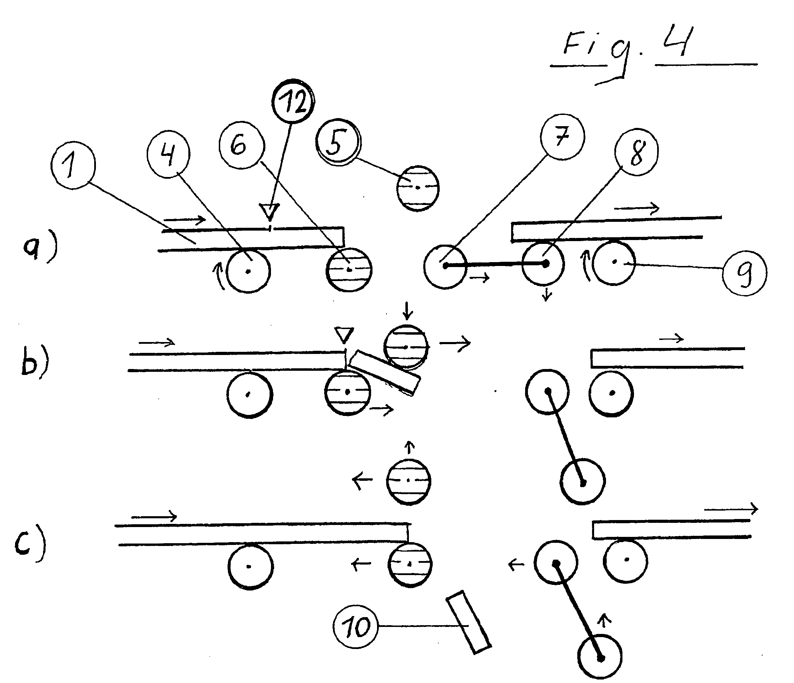

Bei der aus der Fig.4 ersichtlichen 3. Variante sind wiederum die Schleusenwalzen (7,8) miteinander mechanisch gekoppelt und sie bewegen sich ähnlich wie in der 2. Variante, jedoch erfolgt diesmal zuerst eine horizontale Bewegung beider Schleusenwalzen (7,8), bevor sich dann die hintere Schleusenwalze (8) zusätzlich nach unten bewegt.
Wie sich aus der Abfolge der Bewegungsabläufe der Figuren 4a), 4b) und 4c) entnehmen lässt, bewegt sich in der 3. Variante zusätzlich die Brechwalze (6) mit dem horizontal nach rechts laufenden Glasband (1) in gleicher Geschwindigkeit mit und unterstützt es somit im ganzen Bereich während der gesamten Zeit des Vorgangs des Abbrechens des Glasstücks 10). Nach dem Abbrechen des Glasstücks (10) fährt die Brecherwalze (6) wieder in die Ausgangsposition zurück.

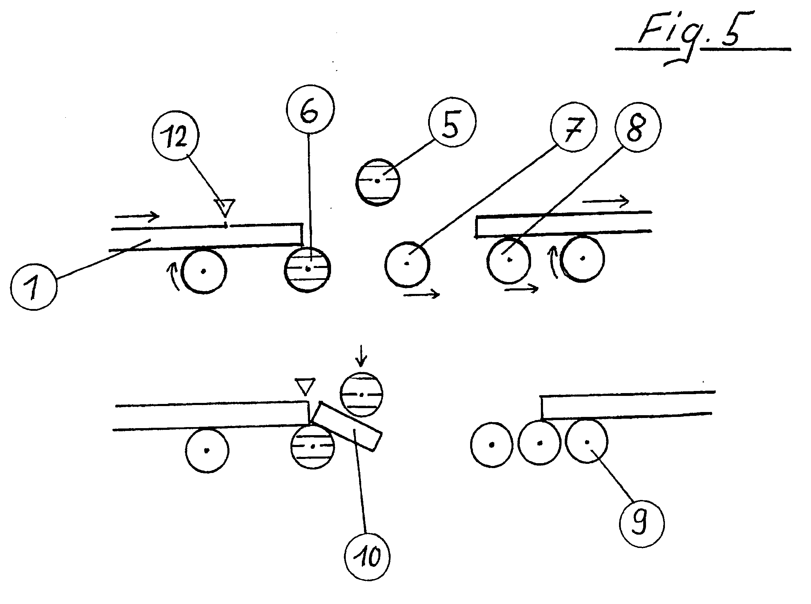

Die aus der Fig.5 ersichtliche 4. Variante beschreibt eine jalousieähnliche Öffnung des Laufbands (11) zum Zweck der Abtrennung und Ausleitung unerwünschter Teile des Glasbandes (1)
Allen beschriebenen Varianten ist gemeinsam, dass sich die Abdruckmittel mit dem laufenden Glasband (1) mitbewegen können, da sonst in bestimmten Fällen eine Verklemmung der Glasteile droht.
Desgleichen ist zusätzlich eine den Abbruchvorgang unterstützende Bewegung der Brecherwalze vorgesehen. Diese kann, je nach den speziellen Verhältnissen in einer zusätzlichen Bewegung der Brecherwalze bestehen die sich den beschriebenen Bewegungen überlagert.

Die Wahl des jeweils günstigsten Verfahrens richtet sich sowohl nach der Dicke des Glasbandes (1) und damit der Geschwindigkeit des Glasbandes (1) als auch nach der Art und dem späteren Verwendungszweck des gefertigten Glases.

Sämtliche Bewegungsvorgänge werden durch entsprechende Sensoren erfasst, deren Ausgangssignale als Grundlage für die Berechnung der Ansteuerungszeiten der Antriebsmittel der Walzen dienen. Als Antriebsmittel werden bevorzugt Servomotoren verwendet.
Mit der erfindungsgemäßen Anlage ist es möglich sehr kurze Glasstreifen auch in kurzer Folge abzutrennen.

## Patentansprüche

1. Vorrichtung zum Abtrennen eines gekennzeichneten Bereichs eines auf einem Laufband (11) fortlaufend produzierten Glasbands (1) mit einem Mittel zum Anritzen, mit einer Brecherwalze und Schleusenwalzen und Mitteln zum Abdrücken und Abbrechen, in einer Anordnung mit folgendem Bewegungsablauf:
a) eine, die Abtrennung des gekennzeichneten Bereichs des Glasbands (1) markierende, Linie (12) wird von einer Markierungseinrichtung (3) auf dem fortlaufenden Glasband (1) angeritzt,
b) erreicht die angeritzte Linie (12) auf dem fortlaufenden Glasband die Brecherwalze (6) wird die der Brecherwalze folgende vordere Schleusenwalze (7) in der Laufrichtung des Glasbandes (1) von einem Servomotor vorwärts bewegt und gleichzeitig wird die mit ihr bezüglich ihrer Drehachse funktionsmäßig verbundene hintere Schleusenwalze (8) von einem Servomotor nach unten bewegt,
c) überschreitet die angeritzte Linie (12) den Bereich der höchste Stelle der Brecherwalze (6) drückt eine von einem Servomotor betriebene Abdrückwalze (5) von oben auf den frei die Brecherwalze (6) überragenden Teil (10) des Glasbands (1) und bricht ihn ab,
d) nach dem Fall des abgebrochenen Glasstücks (10) werden die vordere Schleusenwalze (7) und die hintere Schleusenwalze (8) von dem jeweiligen Servomotor wieder in das Laufband (11) zurückgeklappt.

2. Vorrichtung zum Abtrennen eines gekennzeichneten Bereichs eines auf einem Laufband (11) fortlaufend produzierten Glasbands (1) mit einem Mittel zum Anritzen, mit einer Brecherwalze und Schleusenwalzen und Mitteln zum Abdrücken und Abbrechen, in einer Anordnung mit folgendem Bewegungsablauf:
a) eine, die Abtrennung des gekennzeichneten Bereichs des Glasbands (1) markierende, Linie (12) wird von einer Markierungseinrichtung (3) auf dem fortlaufenden Glasband (1) angeritzt,
b) erreicht die angeritzte Linie (12) auf dem fortlaufenden Glasband die Brecherwalze (6) wird zuerst die hintere Schleusenwalze (8) von einem Servomotor beschleunigt nach unten bewegt und in der Folge die bezüglich ihrer Drehachse funktionsmäßig mit ihr verbundene vordere Schleusenwalze (7) mittels eines weiteren Servomotors von der Brecherwalze (6) weg bewegt,
c) überschreitet die angeritzte Linie (12) den Bereich der höchsten Stelle der Brecherwalze (6), drückt eine von einem Servomotor betriebene Abdrückwalze (5) von oben auf den frei die Brecherwalze (6) überragenden Teil (10) des Glasbands (1) und bricht ihn ab, danach bewegt sich die Brecherwalze (6) von einem weiteren Servomotor getrieben mit dem Glasband mit,
d) nach dem Fall des abgebrochenen Glasstücks (10) werden die vordere Schleusenwalze (7) und die hintere Schleusenwalze (8) von ihrem jeweiligen Servomotor wieder in das Laufband (11) zurückgeklappt, wobei sich die Brecherwalze (6) von ihrem Servomotor getrieben wieder an ihren ursprünglichen Platz bewegt.

3. Vorrichtung zum Abtrennen eines gekennzeichneten Bereichs eines auf einem Laufband (11) fortlaufend produzierten Glasbands (1) mit einem Mittel zum Anritzen, mit einer Brecherwalze und Schleusenwalzen und Mitteln zum Abdrücken und Abbrechen, in einer Anordnung mit folgendem Bewegungsablauf:
a) eine, die Abtrennung des gekennzeichneten Bereichs des Glasbands (1) markierende, Linie (12) wird von einer Markierungseinrichtung (3) auf dem fortlaufenden Glasband (1) angeritzt,
b) erreicht die angeritzte Linie (12) auf dem fortlaufenden Glasband die Brecherwalze (6) werden die, der Brecherwalze (6) folgende, vordere Schleusenwalzen (7) von einem Servomotor und die hintere Schleusenwalze (8) von einem weiteren Servomotor beschleunigt in Laufrichtung des Glasbandes (1) von der Brecherwalze (6) weg bewegt,
c) überschreitet die angeritzte Linie (12) den Bereich der höchsten Stelle der Brecherwalze (6) drückt eine von einem Servomotor angetriebene Abdrückwalze (5) von oben auf den frei die Brecherwalze (6) überragenden Teil (10) des Glasbands (1) und bricht ihn ab,
d) nach dem Fall des abgebrochenen Glasstücks (10) werden die vordere Schleusenwalzen (7) und die hintere Schleusenwalze (8) von dem jeweiligen Servomotor wieder an ihre ursprüngliche Stelle im Laufband (11) zurückgezogen.

4. Vorrichtung nach einem der Ansprüche 1 bis 3,
**dadurch gekennzeichnet,**
**dass** sich die Abdrückwalze (5) während des Abdruckvorgangs von einem Servomotor angetrieben mit dem Glasband mitbewegt.

5. Vorrichtung nach einem der Ansprüche 1 bis 4,
**dadurch gekennzeichnet,**
**dass** die Brecherwalze (6) von einem Servomotor angetrieben eine zusätzlich den Abbruchvorgang unterstützende Bewegung ausführt.

6. Vorrichtung nach einem der Ansprüche 1 bis 5,
**dadurch gekennzeichnet,**
**dass** die für die Steuerung der ablaufenden Bewegungsvorgänge benötigten Informationen von Sensoren erfasst und einer Steuerungsanlage zugeführt werden.

7. Vorrichtung nach einem der vorhergehenden Ansprüche, **dadurch gekennzeichnet,**
**dass** sämtliche Bewegungsvorgänge von Servomotoren ausgeführt werden.

8. Vorrichtung nach einem der vorhergehenden Ansprüche, **dadurch gekennzeichnet,**
**dass** bei dem Auftreten von mehreren Markierungslinien (12), die jeweiligen Abstände dieser Markierungslinien erfasst werden und bei der Steuerung der Abdrückwalze (5), der Brecherwalze (6), der vorderen Schleusenwalze (7) und der hinteren Schleusenwalze (8) berücksichtigt werden.

9. Vorrichtung nach Anspruch 8, **dadurch gekennzeichnet, dass** bei dem Unterschreiten eines bestimmten Abstandes der Markierungslinien (12), abhängig von der jeweiligen Dicke des Glasbandes (1) eine weitere, zusätzliche, Walze von einem Servomotor angetrieben von oben im Bereich der Brecherwalze (6) das Glasband (1) abstützt.

10. Vorrichtung nach Anspruch 9, **dadurch gekennzeichnet, dass** die am Prozess des Abtrennens und des Ausleitens eines Glasstücks (10) beteiligte Abdrückwalze (5), die Brecherwalze (6), die vordere Schleusenwalze (7) und die hintere Schleusenwalze (8), sowie die zusätzliche Walze, zum Abtrennen schräger Markierungslinien (12) auch schräg gestellt werden können.

11. Verfahren zum Abtrennen eines gekennzeichneten Bereichs eines auf einem Laufband (11) fortlaufend produzierten Glasbands (1) mit den folgenden Merkmalen:
a) eine, die Abtrennung des gekennzeichneten Bereichs des Glasbands (1) markierende, Linie (12) wird von einem Mittel zum Anritzen (3) auf dem fortlaufenden Glasband (1) angeritzt,
b) erreicht die angeritzte Linie (12) auf dem fortlaufenden Glasband die Brecherwalze (6), wird die der Brecherwalze folgende vordere Schleusenwalze (7) in der Laufrichtung des Glasbandes (1) vorwärts bewegt und gleichzeitig wird die mit ihr funktionsmäßig verbundene hintere Schleusenwalze (8) nach unten bewegt,
c) überschreitet die angeritzte Linie (12) den Bereich der höchsten Stelle der Brecherwalze (6), drücken Mittel zum Abdrücken (5) von oben auf den frei die Brecherwalze (6) überragenden Teil (10) des Glasbands (1) und brechen ihn ab,
d) nach dem Fall des abgebrochenen Glasstücks (10) werden die Schleusenwalzen (7, 8) wieder in das Laufband (11) zurückgeklappt.

12. Verfahren zum Abtrennen eines gekennzeichneten Bereichs eines auf einem Laufband (11) fortlaufend produzierten Glasbands (1) mit den folgenden Merkmalen:
a) eine, die Abtrennung des gekennzeichneten Bereichs des Glasbands (1) markierende, Linie (12) wird von einem Mittel zum Anritzen (3) auf dem fortlaufenden Glasband (1) angeritzt,
b) erreicht die angeritzte Linie (12) auf dem fortlaufenden Glasband die Brecherwalze (6) wird zuerst die hintere Schleusenwalze (8) beschleunigt nach unten bewegt und in der Folge die funktionsmäßig mit ihr verbundene vordere Schleusenwalze (7) von der Brecherwalze (6) weg bewegt,
c) überschreitet die angeritzte Linie (12) den Bereich der höchsten Stelle der Brecherwalze (6), drücken Mittel zum Abdrücken (5) von oben auf den frei die Brecherwalze (6) überragenden Teil (10) des Glasbands (1) und brechen ihn ab, danach bewegt sich die Brecherwalze (6) mit dem Glasband mit,
d) nach dem Fall des abgebrochenen Glasstücks (10) werden die beiden Schleusenwalzen (7, 8) wieder in das Laufband (11) zurückgeklappt, wobei sich die Brecherwalze (6) wieder an ihren ursprünglichen Platz bewegt.

13. Verfahren zum Abtrennen eines gekennzeichneten Bereichs eines auf einem Laufband (11) fortlaufend produzierten Glasbands (1) mit den folgenden Merkmalen:
a) eine, die Abtrennung des gekennzeichneten Bereichs des Glasbands (1) markierende, Linie (12) wird von einem Mittel zum Anritzen (3) auf dem fortlaufenden Glasband (1) angeritzt,
b) erreicht die angeritzte Linie (12) auf dem fortlaufenden Glasband die Brecherwalze (6) werden die, der Brecherwalze (6) folgenden, Schleusenwalzen (7, 8, 9) in Laufrichtung des Glasbandes (1) von der Brecherwalze (6) weg bewegt,
c) überschreitet die angeritzte Linie (12) den Bereich der höchsten Stelle der Brecherwalze (6), drücken Mittel zum Abdrücken (5) von oben auf den frei die Brecherwalze (6) überragenden Teil (10) des Glasbands (1) und brechen ihn ab,
d) nach dem Fall des abgebrochenen Glasstücks (10) werden die Schleusenwalzen (7, 8, 9) wieder an ihre ursprüngliche Stelle im Laufband (11) zurückgezogen.

14. Verfahren nach einem der Ansprüche 11 bis 13,
**dadurch gekennzeichnet,**
**dass** die Brecherwalze (6) eine zusätzlich den Abbruchvorgang unterstützende Bewegung ausführt.

15. Verfahren nach einem der Ansprüche 11 bis 14,
**dadurch gekennzeichnet,**
**dass** die für die Steuerung der ablaufenden Bewegungsvorgänge benötigten Informationen von Sensoren erfasst und einer Steuerungsanlage zugeführt werden.

16. Verfahren nach einem der vorhergehenden Ansprüche 11 bis 15, **dadurch gekennzeichnet,**
**dass** sämtliche Bewegungsvorgänge von Servomotoren ausgeführt werden.

17. Verfahren nach einem der vorhergehenden Ansprüche 11 bis 16, **dadurch gekennzeichnet,**
**dass** bei dem Auftreten von mehreren Markierungslinien (12), die jeweiligen Abstände dieser Markierungslinien erfasst werden und bei der Steuerung der betreffenden Walzen (5, 6, 7, 8) berücksichtigt werden.

18. Verfahren nach einem der Ansprüche 11 bis 17,
**dadurch gekennzeichnet,**
**dass** bei dem Unterschreiten eines bestimmten Abstandes der Markierungslinien (12), abhängig von der jeweiligen Dicke des Glasbandes (1) eine weitere, zusätzliche, Walze von oben im Bereich der Brecherwalze (6) das Glasband (1). abstützt.

19. Verfahren nach einem der Ansprüche 11 bis 18,
**dadurch gekennzeichnet,**
**dass** die am Prozess des Abtrennens und des Ausleitens eines Glasstücks (10) beteiligten Walzen (5, 6, 7, 8), sowie die zusätzliche Walze, zum Abtrennen schräger Markierungslinien (12) auch schräg gestellt werden können.

## Claims

1. Device for severing a designated region of a glass ribbon (1) produced continuously on a conveyor belt (11), said device having a scoring means, a crusher roller and lock rollers and shearing-off and breaking-off means, in an arrangement having the following movement sequence:
a) a line (12) which marks the severing of the designated region of the glass ribbon (1) is scored on the continuous glass ribbon (1) by a marking device (3),
b) when the scored line (12) on the continuous glass ribbon reaches the crusher roller (6), the front lock roller (7) which follows the crusher roller is moved forward by a servomotor in the running direction of the glass ribbon (1) and, at the same time, the rear lock roller (8) which is connected in terms of function to said front lock roller (7) with respect to its rotational axis is moved downward by a servomotor,
c) if the scored line (12) overshoots the region of the highest point of the crusher roller (6), a servomotor-driven shearing-off roller (5) presses from above onto the part (10) of the glass ribbon (1) which protrudes freely over the crusher roller (6), and breaks said part off,
d) after the glass piece (10) which is broken off has dropped, the front lock roller (7) and the rear lock roller (8) are folded back again into the conveyor belt (11) by the respective servomotor.

2. Device for severing a designated region of a glass ribbon (1) produced continuously on a conveyor belt (11), said device having a scoring means, a crusher roller and lock rollers and shearing-off and breaking-off means, in an arrangement having the following movement sequence:
a) a line (12) which marks the severing of the designated region of the glass ribbon (1) is scored on the continuous glass ribbon (1) by a marking device (3),
b) when the scored line (12) on the continuous glass ribbon reaches the crusher roller (6), first of all the rear lock roller (8) is moved downward in accelerated fashion by a servomotor, and then the front lock roller (7) which is connected in terms of function to said rear lock roller (8) with respect to its rotational axis is moved away by means of a further servomotor from the crusher roller (6),
c) if the scored line (12) overshoots the region of the highest point of the crusher roller (6), a servomotor-driven shearing-off roller (5) presses from above onto the part (10) of the glass ribbon (1) which protrudes freely over the crusher roller (6), and breaks said part off, after which the crusher roller (6) moves together with the glass ribbon driven by a further servomotor,
d) after the glass piece (10) which is broken off has dropped, the front lock roller (7) and the rear lock roller (8) are folded back again into the conveyor belt (11) by their respective servomotor, the crusher roller (6) moving back into its original position driven by its servomotor.

3. Device for severing a designated region of a glass ribbon (1) produced continuously on a conveyor belt (11), said device having a scoring means, a crusher roller and lock rollers and shearing-off and breaking-off means, in an arrangement having the following movement sequence:
a) a line (12) which marks the severing of the designated region of the glass ribbon (1) is scored on the continuous glass ribbon (1) by a marking device (3),
b) when the scored line (12) on the continuous glass ribbon reaches the crusher roller (6), the front lock rollers (7) which follow the crusher roller (6), accelerated by a servomotor, and the rear lock roller (8), accelerated by a further servomotor, are moved away from the crusher roller (6) in the running direction of the glass ribbon (1),
c) if the scored line (12) overshoots the region of the highest point of the crusher roller (6), a servomotor-driven shearing-off roller (5) presses from above onto the part (10) of the glass ribbon (1) which protrudes freely over the crusher roller (6), and breaks said part off,
d) after the glass piece (10) which is broken off has dropped, the front lock rollers (7) and the rear lock roller (8) are pulled back again into their original position in the conveyor belt (11) by the respective servomotor.

4. Device according to one of Claims 1 to 3, **characterized**
**in that** the shearing-off roller (5) moves together with the glass ribbon during the shearing-off process driven by a servomotor.

5. Device according to one of Claims 1 to 4, **characterized**
**in that** the crusher roller (6) performs movement which additionally assists the breaking-off process driven by a servomotor.

6. Device according to one of Claims 1 to 5, **characterized**
**in that** the information required for controlling the movement operations which proceed is detected by sensors and supplied to a control unit.

7. Device according to one of the preceding claims, **characterized**
**in that** all of the movement operations are performed by servomotors.

8. The device according to one of the preceding claims, **characterized**
**in that**, if there are a plurality of marking lines (12), the respective distances between these marking lines are detected and are taken into account when controlling the shearing-off roller (5), the crusher roller (6), the front lock roller (7) and the rear lock roller (8).

9. Device according to Claim 8, **characterized in that**, if a specific distance between the marking lines (12) is undershot, a further, additional roller, driven by a servomotor, supports the glass ribbon (1) from above in the region of the crusher roller (6), depending on the respective thickness of the glass ribbon (1).

10. Device according to Claim 9, **characterized in that** the shearing-off roller (5), the crusher roller (6), the front lock roller (7) and the rear lock roller (8) involved in the process for severing and removing a glass piece (10), and also the additional roller, can also be inclined in order to sever inclined marking lines (12).

11. Method for severing a designated region of a glass ribbon (1) produced continuously on a conveyor belt (11), having the following features:
a) a line (12) which marks the severing of the designated region of the glass ribbon (1) is scored on the continuous glass ribbon (1) by a scoring means (3),
b) when the scored line (12) on the continuous glass ribbon reaches the crusher roller (6), the front lock roller (7) which follows the crusher roller is moved forward in the running direction of the glass ribbon (1) and, at the same time, the rear lock roller (8) which is connected in terms of function to said front lock roller (7) is moved downward,
c) if the scored line (12) overshoots the region of the highest point of the crusher roller (6), shearing-off means (5) press from above onto the part (10) of the glass ribbon (1) which protrudes freely over the crusher roller (6), and break said part off,
d) after the glass piece (10) which is broken off has dropped, the lock rollers (7, 8) are folded back again into the conveyor belt (11).

12. Method for severing a designated region of a glass ribbon (1) produced continuously on a conveyor belt (11), having the following features:
a) a line (12) which marks the severing of the designated region of the glass ribbon (1) is scored on the continuous glass ribbon (1) by a scoring means (3),
b) when the scored line (12) on the continuous glass ribbon reaches the crusher roller (6), first of all the rear lock roller (8) is moved downward in accelerated fashion, and then the front lock roller (7) which is connected in terms of function to said rear lock roller (8) is moved away from the crusher roller (6),
c) if the scored line (12) overshoots the region of the highest point of the crusher roller (6), shearing-off means (5) press from above onto the part (10) of the glass ribbon (1) which protrudes freely over the crusher roller (6), and break said part off, after which the crusher roller (6) moves together with the glass ribbon,
d) after the glass piece (10) which is broken off has dropped, the two lock rollers (7, 8) are folded back again into the conveyor belt (11), the crusher roller (6) moving back into its original position.

13. Method for severing a designated region of a glass ribbon (1) produced continuously on a conveyor belt (11), having the following features:
a) a line (12) which marks the severing of the designated region of the glass ribbon (1) is scored on the continuous glass ribbon (1) by a scoring means (3),
b) when the scored line (12) on the continuous glass ribbon reaches the crusher roller (6), the lock rollers (7, 8, 9) which follow the crusher roller (6) are moved away from the crusher roller (6) in the running direction of the glass ribbon (1),
c) if the scored line (12) overshoots the region of the highest point of the crusher roller (6), shearing-off means (5) press from above onto the part (10) of the glass ribbon (1) which protrudes freely over the crusher roller (6), and break said part off,
d) after the glass piece (10) which is broken off has dropped, the lock rollers (7, 8, 9) are pulled back again into their original position in the conveyor belt (11).

14. Method according to one of Claims 11 to 13, **characterized**
**in that** the crusher roller (6) performs movement which additionally assists the breaking-off process.

15. Method according to one of Claims 11 to 14, **characterized**
**in that** the information required for controlling the movement operations which proceed is detected by sensors and supplied to a control unit.

16. Method according to one of the preceding Claims 11 to 15, **characterized**
**in that** all of the movement operations are performed by servomotors.

17. Method according to one of the preceding Claims 11 to 16, **characterized**
**in that**, if there are a plurality of marking lines (12), the respective distances between these marking lines are detected and are taken into account when controlling the relevant rollers (5, 6, 7, 8).

18. Method according to one of Claims 11 to 17, **characterized**
**in that**, if a specific distance between the marking lines (12) is undershot, a further, additional roller supports the glass ribbon (1) from above in the region of the crusher roller (6), depending on the respective thickness of the glass ribbon (1).

19. The method according to one of Claims 11 to 18, **characterized**
**in that** the rollers (5, 6, 7, 8) involved in the process for severing and removing a glass piece (10), and also the additional roller, can also be inclined in order to sever inclined marking lines (12).

## Revendications

1. Dispositif de séparation d'une région déterminée d'une bande de verre (1) produite en continu sur une bande mobile (11) avec un moyen de traçage, avec un rouleau briseur et des rouleaux de sas et des moyens pour pousser et briser, dans un agencement présentant la progression suivante:
a) une ligne (12) marquant la séparation de la région déterminée de la bande de verre (1) est tracée sur la bande de verre en mouvement (1) au moyen d'un dispositif de marquage (3),
b) lorsque la ligne (12) tracée sur la bande de verre en mouvement atteint le rouleau briseur (6), le rouleau de sas avant (7) qui suit le rouleau briseur est déplacé vers l'avant dans la direction de défilement de la bande de verre (1) au moyen d'un servomoteur et en même temps le rouleau de sas arrière (8) relié fonctionnellement à celui-ci au niveau de son axe de rotation est déplacé vers le bas par un servomoteur,
c) lorsque la ligne tracée (12) dépasse la région du point le plus haut du rouleau briseur (6), un rouleau de poussée (5) entraîné par un servomoteur pousse par le haut sur la partie (10) de la bande de verre (1) dépassant librement le rouleau briseur (6) et la brise,
d) après la chute du morceau de verre brisé (10), le rouleau de sas avant (7) et le rouleau de sas arrière (8) sont de nouveau relevés dans la bande mobile (11) par le servomoteur respectif.

2. Dispositif de séparation d'une région déterminée d'une bande de verre (1) produite en continu sur une bande mobile (11) avec un moyen de traçage, avec un rouleau briseur et des rouleaux de sas et des moyens pour pousser et briser, dans un agencement présentant la progression suivante:
a) une ligne (12) marquant la séparation de la région déterminée de la bande de verre (1) est tracée sur la bande de verre en mouvement (1) au moyen d'un dispositif de marquage (3),
b) lorsque la ligne (12) tracée sur la bande de verre en mouvement atteint le rouleau briseur (6), le rouleau de sas arrière (8) est d'abord déplacé vers le bas de façon accélérée par un servomoteur et ensuite le rouleau de sas avant (7) relié fonctionnellement à celui-ci au niveau de son axe de rotation est écarté du rouleau briseur (6) au moyen d'un autre servomoteur,
c) lorsque la ligne tracée (12) dépasse la région du point le plus haut du rouleau briseur (6), un rouleau de poussée (5) entraîné par un servomoteur pousse par le haut sur la partie (10) de la bande de verre (1) dépassant librement le rouleau briseur (6) et la brise, puis le rouleau briseur (6) entraîné par un autre servomoteur se déplace avec la bande de verre,
d) après la chute du morceau de verre brisé (10), le rouleau de sas avant (7) et le rouleau de sas arrière (8) sont de nouveau relevés à leur place initiale dans la bande mobile (11) par leur servomoteur respectif, le rouleau briseur (6) entraîné par son servomoteur se déplaçant de nouveau à sa place initiale.

3. Dispositif de séparation d'une région déterminée d'une bande de verre (1) produite en continu sur une bande mobile (11) avec un moyen de traçage, avec un rouleau briseur et des rouleaux de sas et des moyens pour pousser et briser, dans un agencement présentant la progression suivante:
a) une ligne (12) marquant la séparation de la région déterminée de la bande de verre (1) est tracée sur la bande de verre en mouvement (1) au moyen d'un dispositif de marquage (3),
b) lorsque la ligne (12) tracée sur la bande de verre en mouvement atteint le rouleau briseur (6), les rouleaux de sas avant (7), qui suivent le rouleau briseur (6), et les rouleaux de sas arrière (8) sont écartés du rouleau briseur (6) de façon accélérée dans la direction de déplacement de la bande de verre (1) respectivement par un servomoteur et par un autre servomoteur,
c) lorsque la ligne tracée (12) dépasse la région du point le plus haut du rouleau briseur (6), un rouleau de poussée (5) entraîné par un servomoteur pousse par le haut sur la partie (10) de la bande de verre (1) dépassant librement le rouleau briseur (6) et la brise,
d) après la chute du morceau de verre brisé (10), le rouleau de sas avant (7) et le rouleau de sas arrière (8) sont de nouveau rétractés à leur place initiale dans la bande mobile (11) par le servomoteur respectif.

4. Dispositif selon l'une quelconque des revendications 1 à 3, **caractérisé en ce que** le rouleau de poussée (5) entraîné par un servomoteur se déplace avec la bande de verre pendant l'opération de poussée.

5. Dispositif selon l'une quelconque des revendications 1 à 4, **caractérisé en ce que** le rouleau briseur (6) entraîné par un servomoteur effectue en plus un déplacement renforçant l'opération de bris.

6. Dispositif selon l'une quelconque des revendications 1 à 5, **caractérisé en ce que** les informations nécessaires pour la commande des opérations de déplacement en cours sont détectées par des capteurs et transmises à une installation de commande.

7. Dispositif selon l'une quelconque des revendications précédentes, **caractérisé en ce que** toutes les opérations de déplacement sont exécutées par des servomoteurs.

8. Dispositif selon l'une quelconque des revendications précédentes, **caractérisé en ce que**, en cas de présence de plusieurs lignes de marquage (12), les distances respectives de ces lignes de marquage sont détectées et sont prises en considération lors de la commande du rouleau de poussée (5), du rouleau briseur (6), du rouleau de sas avant (7) et du rouleau de sas arrière (8).

9. Dispositif selon la revendication 8, **caractérisé en ce que**, en cas de descente en dessous d'une distance déterminée des lignes de marquage (12), en fonction de l'épaisseur respective de la bande de verre (1), un autre rouleau supplémentaire entraîné par un servomoteur soutient par le haut la bande de verre (1) dans la région du rouleau briseur (6).

10. Dispositif selon la revendication 9, **caractérisé en ce que** le rouleau de poussée (5), le rouleau briseur (6), le rouleau de sas avant (7) et le rouleau de sas arrière (8) participant au processus de séparation et d'évacuation d'un morceau de verre (10), ainsi que le rouleau supplémentaire, peuvent aussi être placés en oblique pour la séparation de lignes de marquage obliques (12).

11. Procédé de séparation d'une région déterminée d'une bande de verre (1) produite en continu sur une bande mobile (11), avec les caractéristiques suivantes:
a) une ligne (12) marquant la séparation de la région déterminée de la bande de verre (1) est tracée sur la bande de verre en mouvement (1) par un moyen de marquage (3),
b) lorsque la ligne (12) tracée sur la bande de verre en mouvement atteint le rouleau briseur (6), le rouleau de sas avant (7) qui suit le rouleau briseur est déplacé vers l'avant dans la direction de défilement de la bande de verre (1) et en même temps le rouleau de sas arrière (8) relié fonctionnellement à celui-ci est déplacé vers le bas,
c) lorsque la ligne tracée (12) dépasse la région du point le plus haut du rouleau briseur (6), des moyens de poussée (5) poussent par le haut sur la partie (10) de la bande de verre (1) dépassant librement le rouleau briseur (6) et la brisent,
d) après la chute du morceau de verre brisé (10), les rouleaux de sas (7, 8) sont de nouveau relevés dans la bande mobile (11).

12. Procédé de séparation d'une région déterminée d'une bande de verre (1) produite en continu sur une bande mobile (11), avec les caractéristiques suivantes:
a) une ligne (12) marquant la séparation de la région déterminée de la bande de verre (1) est tracée sur la bande de verre en mouvement (1) par un moyen de marquage (3),
b) lorsque la ligne (12) tracée sur la bande de verre en mouvement atteint le rouleau briseur (6), le rouleau de sas arrière (8) est d'abord déplacé vers le bas de façon accélérée et ensuite le rouleau de sas avant (7) relié fonctionnellement à celui-ci est écarté du rouleau briseur (6),
c) lorsque la ligne tracée (12) dépasse la région du point le plus haut du rouleau briseur (6), des moyens de poussée (5) poussent par le haut sur la partie (10) de la bande de verre (1) dépassant librement le rouleau briseur (6) et la brisent, puis le rouleau briseur (6) se déplace avec la bande de verre,
d) après la chute du morceau de verre brisé (10), les deux rouleaux de sas (7, 8) sont de nouveau relevés dans la bande mobile (11), le rouleau briseur (6) se déplaçant de nouveau à sa place initiale.

13. Procédé de séparation d'une région déterminée d'une bande de verre (1) produite en continu sur une bande mobile (11), avec les caractéristiques suivantes:
a) une ligne (12) marquant la séparation de la région déterminée de la bande de verre (1) est tracée sur la bande de verre en mouvement (1) par un moyen de marquage (3),
b) lorsque la ligne (12) tracée sur la bande de verre en mouvement atteint le rouleau briseur (6), les rouleaux de sas (7, 8, 9), qui suivent le rouleau briseur (6), sont écartés du rouleau briseur (6) dans la direction de déplacement de la bande de verre (1),
c) lorsque la ligne tracée (12) dépasse la région du point le plus haut du rouleau briseur (6), des moyens de poussée (5) poussent par le haut sur la partie (10) de la bande de verre (1) dépassant librement le rouleau briseur (6) et la brisent,
d) après la chute du morceau de verre brisé (10), les rouleaux de sas (7, 8, 9) sont de nouveau rétractés à leur place initiale dans la bande mobile (11).

14. Procédé selon l'une quelconque des revendications 11 à 13, **caractérisé en ce que** le rouleau briseur (6) effectue un déplacement supplémentaire renforçant l'opération de bris.

15. Procédé selon l'une quelconque des revendications 11 à 14, **caractérisé en ce que** les informations nécessaires pour la commande des opérations de déplacement en cours sont détectées par des capteurs et transmises à une installation de commande.

16. Procédé selon l'une quelconque des revendications 11 à 15, **caractérisé en ce que** toutes les opérations de déplacement sont exécutées par des servomoteurs.

17. Procédé selon l'une quelconque des revendications 11 à 16, **caractérisé en ce que**, en cas de présence de plusieurs lignes de marquage (12), les distances respectives de ces lignes de marquage sont détectées et sont prises en considération lors de la commande des rouleaux concernés (5, 6, 7, 8).

18. Procédé selon l'une quelconque des revendications 11 à 17, **caractérisé en ce que**, en cas de descente en dessous d'une distance déterminée des lignes de marquage (12), en fonction de l'épaisseur respective de la bande de verre (1), un autre rouleau supplémentaire soutient par le haut la bande de verre (1) dans la région du rouleau briseur (6).

19. Procédé selon l'une quelconque des revendications 11 à 18, **caractérisé en ce que** les rouleaux (5, 6, 7, 8) participant au processus de séparation et d'évacuation d'un morceau de verre (10), ainsi que le rouleau supplémentaire, peuvent aussi être placés en oblique pour la séparation de lignes de marquage obliques (12).
